Europäisches Patentamt
European Patent Office
Office européen des brevets

(19)

(11) Publication number: **0 420 245 A1**

# (12) EUROPEAN PATENT APPLICATION

(21) Application number: 90118578.5

(22) Date of filing: 27.09.90

(51) Int. Cl.$^5$: C08K 3/22, C08K 3/34, C08K 3/38, C08L 71/00

(30) Priority: 29.09.89 JP 251789/89

(43) Date of publication of application: 03.04.91 Bulletin 91/14

(84) Designated Contracting States: BE CH DE FR GB IT LI NL SE

(71) Applicant: IDEMITSU KOSAN COMPANY LIMITED
1-1, Marunouchi 3-chome Chiyoda-ku
Tokyo(JP)

(72) Inventor: Kawato, Hiroshi
c/o Idemitsu Kosan Co. Ltd., 1280 Kamiizumi
Sodegaura-machi, Kimitsu-gun,
Chiba-ken(JP)
Inventor: Ishii, Tatsuo
c/o Idemitsu Kosan Co. Ltd., 1280 Kamiizumi
Sodegaura-machi, Kimitsu-gun,
Chiba-ken(JP)

(74) Representative: Strehl, Schübel-Hopf, Groening
Maximilianstrasse 54 Postfach 22 14 55
W-8000 München 22(DE)

## (54) Polycyanoarylether resin compositions.

(57) A polycyanoarylether resin composition prepared by mixing
(A) a polycyanoarylether consisting essentially of the repeating unit represented by the following general formula

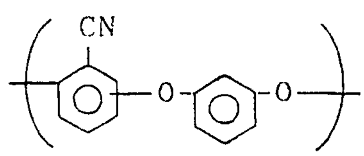

(I)

having a reduced viscosity [$\eta$ sp/C] of from 0.3 to 2.0 dl/g as measured at 60 °C in p-chlorophenol at a concentration of 0.2 g/dl; and
(B) at least an inorganic filler selected from the group consisting of silicon nitride, silicon carbide, silica, alumina, zirconia, and boron nitride; the amount of the polycyanoarylether being from 85 to 15 % by weight and the amount of the inorganic filler being from 15 to 85 % by weight based on the total of the amounts of the polycyanoarylether and the inorganic filler respectively is improved in heat resistance and stiffness and has reduced anisotropy of coefficient of linear expansion.

EP 0 420 245 A1

# POLYCYANOARYLETHER RESIN COMPOSITIONS

## BACKGROUND OF THE INVENTION

### (a) Field of the Invention

The present invention relates to a polycyanoarylether resin composition, more particularly to a polycyanoarylether resin composition which excels in heat resistance and stiffness and has good forming processability because of its small anisotropy in coefficient of linear expansion. Such a polycyanoarylether resin composition is useful as a material for various kinds of molded articles including electric or electronic parts, car parts, machine parts, and aerospace parts.

### (b) Description of the Related Art

Polycyanoarylether resins are known as engineering resins having excellent properties including heat resistance, mechanical properties, electrical properties, incombustibility, and chemical resistance (Japanese Patent Application Kokai Koho (Laid-open) No. 62-223226). Nevertheless, polycyanoarylether resins have a problem that they in themselves are still insufficient in heat resistance and have a high coefficient of linear expansion and insufficient stiffness, and the problem has limited their utilization, particularly their utilization at high temperatures.

There have been proposed some means for solving the problem.

For instance, in Japanese Patent Application Kokai Koho (Laid-open) No. 61-144917 disclosed is an improvement of heat resistance and stiffness by addition of fibrous reinforcing materials. However, the resulting resin composition also has a problem that because the fibrous reinforcing materials align along the flow of resin at the time of molding, its anisotropy in coefficient of linear expansion, namely the difference between the coefficients of linear expansion in the machine direction (MD) and transverse direction (TD) of the resin is increased, thereby causing distortions and warps in the molded articles used at high temperatures.

In Japanese Patent Application Kokai Koho (Laid-open) No. 1-178552 disclosed is a heat resistant resin composition prepared by mixing $Al_2O_3$ or $SiO_2$ with a polycyanoarylether in an amount of 5 % by weight, but such a small amount of these additives can barely bring a flexural modulus of about 40,000 $kg/cm^2$ and a heat distortion temperature (HDT) of about 160 °C which are still insufficient.

In Japanese Patent Application Kokai Koho (Laid-open) No. 63-10661 disclosed is a polyphenylenesulfide resin composition which excels in heat resistance and strength and as well has extremely reduced anisotropy of coefficient of linear expansion. However, its stiffness at high temperatures is not completely satisfactory because the heat resistance of the matrix resin is relatively poor.

That is, the conventional resin compositions have the above-described problems respectively, and there has been a demand for the development of a resin composition which has excellent heat resistance and stiffness, particularly maintains sufficient stiffness even at high temperatures, and as well exhibits reduced anisotropy in coefficient of linear expansion and has good molding processability innate in resins.

## SUMMARY OF THE INVENTION

The present invention was made in consideration of the above-described circumstances.

An object of the present invention is to provide a polycyanoarylether resin composition which is advantageous in that it has excellent heat resistance and stiffness, particularly maintains high stiffness even at high temperatures, and it as well exhibits reduced anisotropy of coefficient of linear expansion and has good molding processability.

As the result of our researches for accomplishing the above-described object, we found that the object can be satisfied by a resin composition prepared by using, as a matrix resin, a polycyanoarylether which has a repeating unit of a specific structure and has a specific range of reduced viscosity and mixing it with a specific inorganic filler in specified ratios, and further, we found that a resin composition prepared by

mixing the polycyanoarylether, the inorganic filler, and a fibrous reinforcing material not only satisfies the above-described object but also exhibits excellent mechanical properties including strength, and eventually completed the present invention based on the findings.

That is, the present invention provides a polycyanoarylether resin composition prepared by mixing

(A) a polycyanoarylether consisting essentially of the repeating unit represented by the following general formula

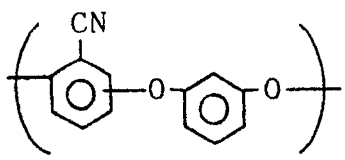

(I)

having a reduced viscosity [η sp/C] of from 0.3 to 2.0 dl/g as measured at 60 °C in p-chlorophenol at a concentration of 0.2 g/dl; and

(B) at least an inorganic filler selected from the group consisting of silicon nitride, silicon carbide, silica, alumina, zirconia, and boron nitride; the amount of the polycyanoarylether being from 85 to 15 % by weight and the amount of the inorganic filler being from 15 to 85 % by weight, based on the total of the amounts of the polycyanoarylether and the inorganic filler, respectively.

The present invention further relates to a resin composition which is further improved in mechanical properties including strength by mixing a specific component (fibrous reinforcing material) in a specified ratio with the polycyanoarylether and the inorganic filler which are the components of the above-described resin composition, and the present invention provides a polycyanoarylether resin composition prepared by mixing

(A) a polycyanoarylether consisting essentially of the repeating unit represented by the following general formula

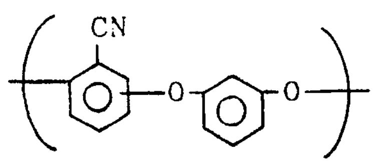

(I)

having a reduced viscosity [η sp/C] of from 0.3 to 2.0 dl/g as measured at 60 °C in p-chlorophenol at a concentration of 0.2 g/dl;

(B) at least an inorganic filler selected from the group consisting of silicon nitride, silicon carbide, silica, alumina, zirconia, and boron nitride; and

(C) a fibrous reinforcing material; the amount of the polycyanoarylether being from 85 to 15 % by weight, the amount of the inorganic filler being from 10 to 80 % by weight, the amount of the fibrous reinforcing material being from 5 to 30 % by weight, and the total of the amounts of the inorganic filler and the fibrous reinforcing material being from 15 to 85 % by weight, based on the total of the amounts of the polycyanoarylether, the inorganic filler, and the fibrous reinforcing material, respectively.

## DESCRIPTION OF THE PREFERRED EMBODIMENTS

Any polycyanoarylether may be used in the present invention so long as it contains the repeating unit represented by the general formula (I) as the main structural component. Although the ratio of the repeating unit represented by the general formula (I) cannot be uniformly defined because it varies depending on the kind of the polycyanoarylether, etc., the preferred polycyanoarylether generally contains at least 90 % by weight of the repeating unit represented by the general formula (I), and the particularly preferred is a homopolymer consisting of the repeating unit represented by the general formula (I). Some examples of other repeating units which may be contained in the polycyanoarylether include those represented by the following general formulas (II) and (III):

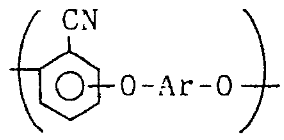 (II)

wherein Ar represents 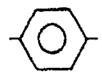 , 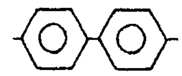 , 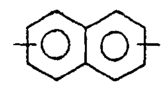 ,

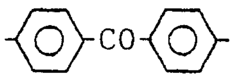 , 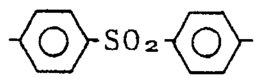 or 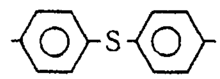 , and

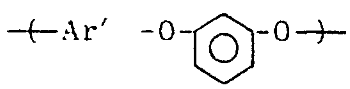 (III)

wherein Ar′ represents 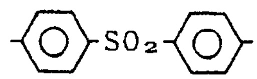 or 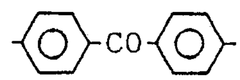 .

These repeating units represented by the general formula (II) and (III) may be contained in the polycyanoarylether in a small amount, preferably in an amount of less than 10 % by weight of the polycyanoarylether. The presence of not less than 10 % by weight of these repeating units represented by the general formulas (II) and (III) in the polycyanoarylether is undesirable because it may damage the characteristics of the polycyanoarylether.

The polycyanoarylether to be used in the present invention may be prepared, for example, by allowing a dihalogenobenzonitrile represented by the following general formula (IV):

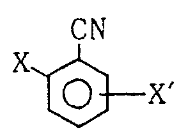 (IV)

wherein each of X and X′ represents a halogen atom, and resorcinol to react with each other in an approximately equimolar ratio, in the presence of an alkali metal carbonate, in an aprotic polar solvent, and in an atmosphere of an inert gas.

Some examples of the alkali metal carbonate which may be used include carbonates of alkali metals, such as sodium carbonate, potassium carbonate, lithium carbonate, cesium carbonate, and rubidium carbonate, and hydrogencarbonates of alkali metals corresponding to these carbonates of alkali metals. The amount of the alkali metal carbonate used may be varied depending on the conditions, and it is, generally, from 1.0 to 1.3 times equivalent of resorcinol, particularly preferably, slightly in excess.

Some examples of the aprotic polar solvent which may be used include N-methylpyrrolidone, 1,3-dimethylimidazolidinone, dimethylsulfoxide, dimethylformamide, and dimethylacetamide, and the amount of the aprotic polar solvent used is not particularly limited, so long as it is sufficient for dissolving the compound represented by the general formula (IV) and resorcinol.

Chain-extending agents or end-terminators, for example, fluorobenzonitrile, may be added prior to or during polymerization reaction.

Other reaction conditions depend on various circumstances and cannot be determined uniformly, but generally, the reaction temperature is not lower than 200 °C preferably from 200 to 210 °C , and the reaction time is from 2 to 6 hours.

Thus prepared various polycyanoarylethers may be used in the present invention individually or in a combination of two or more of them, for example, as a mixture, provided that the polycyanoarylethers to be used individually or the mixtures of the polycyanoarylethers to be used in combination have a reduced viscosity [$\eta$ sp/C] of from 0.3 to 2.0 dl/g, preferably from 0.5 to 1.5 dl/g, as measured at 60 °C in p-chlorophenol at a concentration of 0.2 g/dl.

If the reduced viscosity measured under the above-described conditions is less than 0.3 dl/g, the properties of the resin including strength and heat resistance will be insufficient, and on the other hand, if it exceeds 2.0 dl/g, the melt viscosity of the resin will increase too high, thereby making it difficult practically to increase the amount of the inorganic filler added to the specified percentage described above, and in both cases, the object of the present invention will not be accomplished.

The resin composition of the present invention is prepared by mixing the above-described polycyanoarylether at least with the above-described inorganic filler, i.e. at least one kind of inorganic filler selected from the group consisting of silicon nitride, silicon carbide, silica, alumina, zirconia, and boron nitride.

Mechanical strength is further increased by mixing the above-described fibrous reinforcing material with the composition of the present invention comprising the polycyanoarylether and the inorganic filler .

The silicon carbide to be used in the present invention includes silicon carbides of various compositions, and generally, silicon carbide represented by the formula: SiC may be suitably used.

The silicon nitride to be used in the present invention includes silicon nitrides of various compositions, and generally, silicon nitride represented by the formula $Si_3N_4$ may be suitably used.

The silica to be used in the present invention may be various ones including $SiO_2$ or those comprising $SiO_2$ as the main component, for example, silica gel, fused silica, and quartz. Among these, fused silica is particularly preferable.

The alumina to be used in the present invention may be various ones including $Al_2O_3$ or those comprising $Al_2O_3$ as the main component, for example $\gamma$ -alumina and $\alpha$ -alumina. Among these, $\alpha$ -alumina is particularly preferable.

The zirconia to be used in the present invention includes $ZrO_2$ or those comprising $ZrO_2$ as the main component, for example stabilized zirconia or partially stabilized zirconia. Among these, partially stabilized zirconia is particularly preferable.

The boron nitride to be used in the present invention includes boron nitride of various compositions, and generally, boron nitride represented by the formula: BN is suitably used.

Among these various kinds of inorganic fillers, the particularly preferred are $Si_3N_4$, $Al_2O_3$, and SiC.

The above-described inorganic fillers may be used individually or in a combination of two or more of them. In case of combined use, they may be used as a mixture of two or more of them or as a complex compound comprised of two or more of them. For instance, in case where silica and alumina are used in combination, they may be used as a mixture or as silica-alumina or the like, and other inorganic fillers also may be used as a mixture or a complex compound.

Although the shape of the above-described inorganic filler to be mixed is not particularly limited, inorganic fillers of particulate form are generally preferable.

The particle size of the particulate inorganic fillers is not particularly limited, but generally, those having a particle size of from 0.1 to 200 $\mu$ m, preferably from 0.5 to 50 $\mu$ m are suitably used.

The surface of the above-described inorganic filler may be subjected to surface treatment with, for example, silane coupling agents or titanate coupling agents to improve the affinity with the above-described polycyanoarylether which is to be the matrix resin, according to demand.

The fibrous reinforcing material to be used in the present invention may be of various kinds including known ones, such as inorganic fibrous reinforcing materials, organic fibrous reinforcing materials, metallic fibrous reinforcing materials, and compounds thereof. Generally, those which after mixing, have a ratio of the length "L" and the diameter "D", namely an aspect ratio (L/D), of not less than 5 in the resin composition are suitably used.

Some illustrative examples of the fibrous reinforcing material include glass fiber, carbon fiber, aramid fiber, potassium titanate fiber, alumina fiber, silicon nitride fiber, and stainless fiber.

Among these, glass fiber, carbon fiber, and aramid fiber are particularly preferable.

With respect to the shape of the glass fiber to be mixed, generally, those having a diameter of from 5 to 20 $\mu$ m and an aspect ratio of not less than 20 are suitably used.

Various known carbon fibers including acrylonitrile carbon fibers, pitch carbon fibers, and cellulosic carbon fibers may be used.

Some examples of the carbon fibers which are commercially available include TORAYCA T-300 (Trademark, produced by Toray Industries, Inc.), BESFIGHT HTA, BESFIGHT 1000 (Trademark, produced by Toho Rayon Co., Ltd.), and KRECA M, KRECA C (Trademark, produced by Kureha Chemical Industry Co., Ltd.).

The preferred carbon fibers to be mixed are those having a fiber diameter of from 5 to 20 $\mu$ m and a fiber length of approximately from 0.1 to 10 mm, and it is generally suitable to use chopped fiber of approximately 3 mm in length or roving, which has been generally used as a filler for resins.

Examples of the above-described aramid fibers which are generally used are wholly aromatic polyamide fibers.

Some examples of the aramid fibers which are commercially available include KEVLAR 49, PRD 49, and NORMEX (Trademark, produced by E. I. Du Pont de Nemours and Company) and CORNEX (Trademark, produced by Teijin Ltd.).

The fiber diameter thereof is not particularly limited, but those having a fiber diameter of from 5 to 40 $\mu$ m, preferably approximately from 7 to 15 $\mu$ m may be suitably used. The preferred fiber length thereof is approximately from 0.5 to 10 mm, and generally, chopped fiber having a fiber length of about 3 mm, which has been generally used as filler for resins, may be suitably used.

Various kinds of potassium titanate fibers may be used in the present invention, and generally, those having a mean fiber length of from 5 to 100 $\mu$ m and a mean fiber diameter of from 0.05 to 2 $\mu$ m, preferably a mean fiber length of from 20 to 50 $\mu$ m and a mean fiber diameter of from 0.1 to 0.5 $\mu$ m may be suitably used.

The potassium titanate fibers may be those which are commercially available, and some examples include TISMO D101 (Trademark, produced by Otsuka Chemical Co., Ltd., Mohs hardness number: 4.0, mean fiber length: 20 $\mu$ m, mean fiber diameter: 0.1 $\mu$ m), and B-type potassium titanate fiber produced by Kuboda, Ltd. (Mohs hardness number: 4.0, mean fiber length: 45 $\mu$ m, mean fiber diameter: 0.5 $\mu$ m).

Although the above-described various kinds of fibrous reinforcing materials including glass fiber, carbon fiber, etc. may be used as they are, it is also possible to use the fibrous reinforcing materials the surfaces of which have been treated with various treating agents, for example, those the surfaces of which have been treated by acid treatment, base treatment, partial acid treatment or metallizing treatment or those the surface of which have been treated, for example, with silane coupling agents or titanate coupling agents to increase their affinity with polycyanoarylether to be the matrix resin.

The above-described various kinds of fibrous reinforcing material may be used individually or in a combination of two or more of them.

The resin composition of the present invention (hereinafter, it will be called sometimes "the first resin composition".) is prepared by mixing the above-described polycyanoarylether (Hereinafter, it will be called sometimes "component (A)".) and the above-described inorganic filler (Hereinafter, it will be called sometimes "component (B)".) in the ratios of from 85 to 15 % by weight of the component (A) and from 15 to 85 % by weight of the component (B), preferably in the ratios of from 80 to 20 % by weight of the component (A) and from 20 to 80 % by weight of the component (B), based on the total (100 % by weight) of the amounts of the component (A) and the component (B).

If the percentage of the component (B) is less than 15 % by weight, the improvement in heat resistance and stiffness will be insufficient, and on the other hand, if it exceeds 85 % by weight, molding will be difficult, and in both cases, the object of the present invention cannot be accomplished.

The resin composition of the present invention wherein the fibrous reinforcing material is mixed (Hereinafter, it will be called sometimes "the second resin composition".) is prepared by mixing the component (A), the component (B), and the above-described fibrous reinforcing material (Hereinafter, it will be called sometimes "component (C)".) in the ratios of from 85 to 15 % by weight of the component (A), from 10 to 80 % by weight of the component (B), and from 5 to 30 % by weight of the component (C) based on the total (100 % by weight) of the amounts of the component (A), the component (B), and the component (C), with the proviso that the total of the amounts of the component (B) and the component (C) is within the range of from 15 to 85 % by weight, preferably in the ratios of from 70 to 20 % by weight of the component (A), from 20 to 70 % by weight of the component (B), and from 10 to 20 % by weight of the component (C), with the proviso that the total of the amounts of the component (B) and the component (C) is within the range of from 30 to 80 % by weight.

In the second resin composition, if the percentage of the component (C) is less than 5 % by weight, the reinforcing effect will be small, and on the other hand, if it exceeds 30 % by weight, anisotropy in coefficient of linear expansion will be increased. If the percentage of the component (D) is less than 10 % by weight, the improvements in heat resistance and stiffness will be insufficient, and on the other hand, if it exceeds 80 % by weight, molding will be difficult.

If the total of the amounts of the component (B) land the component (C) exceeds 85 % by weight, molding will be difficult, and in addition, it will be impossible to make use of the characteristics of the polycyanoarylether as the matrix resin sufficiently, and the object of the present invention cannot be accomplished.

Into the resin compositions of the present invention (the first resin composition and the second resin composition), various additive ingredients other than the above-described ingredients, for example, various kinds of plasticizers, colorants, heat stabilizers, weatherproof stabilizers, lubricants, antioxidants, UV absorbers, antistatic agents, other inorganic fillers including mica and talc, untackifiers, and release agents, or other polymer ingredients may also be added optionally according to demand, so long as the accomplishment of the object of the present invention is not hindered.

The method of preparing the resin compositions of the present invention (the first resin composition and the second resin composition) is not particularly limited so long as the above-described essential ingredients are mixed in the specified ratios described above, and various methods including known methods may be used.

For instance, the resin compositions of the present invention may be prepared by merely dry-mixing the ingredients or by melt-mixing or melt-kneading the ingredients.

Generally, the resin composition of the present invention may be prepared by dry-mixing the above-described ingredients essential for the resin composition of the present invention (or together with other additive ingredients according to circumstances) and melt-kneading the resulting mixture using, for example, a single-screw or twin-screw extruder. The appropriate melting temperature at the time of melt-kneading is generally from 340 to 420 °C , preferably from 350 to 380 °C . Kneading time is generally from 1 to 10 minutes, preferably from 2 to 5 minutes.

Thus obtained resin composition is molded into various molded matters such as pellets according to demand, and is then molded into various molded products of desired shapes, such as component parts, by injection molding, etc.

Injection molding is generally employed for the molding, but other molding techniques including transfer molding, calender molding, extrusion molding, and compression molding may also be employed.

Thus obtained resin composition of the present invention sufficiently makes use of the excellent properties innate in polycyanoarylether resins including heat resistance and mechanical strength, and is as well improved sufficiently in heat resistance and stiffness. Particularly, the resin composition of the present invention is advantageous in that it maintains high stiffness even at high temperatures and in that its small anisotropy in coefficient of linear expansion considerably prevents molded articles from warps and distortions. The resin composition of the present invention is also advantageous in that it has good molding processability. In addition to the above-described excellent properties and advantages, the second resin composition of the present invention has another advantage that it has further improved mechanical properties including strength.

As described above, the polycyanoarylether resin composition of the present invention has excellent properties which are extremely advantageous in practical uses, and therefore, it can be suitably used in various fields of a wide range as the materials for various molded articles including electric and electronic parts, car parts, machine parts, aerospace parts.

The present invention will be described in more detail with reference to the following Examples. These Examples, however, are not to be construed to limit the scope of the present invention.

EXAMPLES 1 TO 21 AND COMPARATIVE EXAMPLES 1 TO 4

Mixtures of several different compositions were prepared by dry-mixing a polycyanoarylether consisting of the repeating units represented by the formula

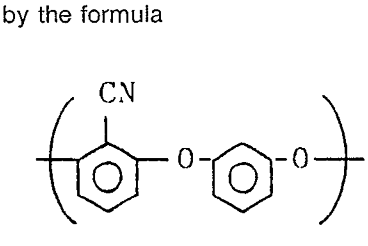

and having a reduced viscosity [$\eta$ sp/C] of 0.7 dl/g as measured at 60 °C in p-chlorophenol at a concentration of 0.2 g/dl and the inorganic fillers (particulate inorganic fillers) shown in Table 1 in the ratios shown in Table 1. The obtained mixtures or the obtained mixtures and the fibrous reinforcing materials shown in Table 1 (carbon fiber, glass fiber or KEVLAR fiber) were melt-kneaded at a cylinder temperature of 350 °C using a continuous kneading extruder (Type: KCK70-22VEX(6) produced by KCK Industrial Co., Ltd.), to obtain pellets of different kinds of resin compositions. In the preparation of the pellets, carbon fiber, glass fiber, and KEVLAR fiber were fed using a side feeder.

Thus obtained pellets were injection molded using an injection molding machine (Type: IS-45P

produced by Toshiba Machine Co., Ltd.) under the conditions of cylinder temperature of 350 °C and die temperature of 200 °, C to produce test strips for measuring flexural modulus and flexural strength (width: 10 mm, thickness: 4 mm, length: 85 mm), test strips for measuring heat distortion temperature (width: 6.4 mm, thickness: 12.7 mm, length: 127 mm), and plates (width, length: 80 mm, thickness: 3.2 mm). Further, test strips (3.2 mm× 10 mm × 10 mm) for measuring coefficient of linear expansion were cut out from the plates.

The test strips of the above-described various shapes were subjected to measurements of flexural modulus, flexural strength, heat distortion temperature (HDT), coefficient of linear expansion, and anisotropy in coefficient of linear expansion according to the following test methods.

(i) flexural modulus and flexural strength: according to ASTM D-790

(ii) heat distortion temperature (HDT): according to ASTM D-648

(iii) coefficient of linear expansion: Coefficients of linear expansion at 30 to 50 °C were measured according to ASTM D-696.

(iv) anisotropy in coefficient of linear expansion: Anisotropy was determined using the coefficients of linear expansion in machine direction (MD) and transverse direction (TD) and the following equation.

$$\text{Anisotropy} = \frac{\text{Coefficient of linear expansion in MD}}{\text{Coefficient of linear expansion in TD}}$$

With regard to the evaluations of the molding processability of the resin compositions, those the melted matter of which could be injected and molded without hindrance at an injection pressure of 1,500 kg/cm$^2$ and a temperature of 350 °C were rated as "good", and those the melted matter of which could not be filled into the die to be molded were rated as "poor".

The results are shown in Table 2.

Table 1

| Composition (% by weight) | Example No. 1 | 2 | 3 | 4 | 5 | 6 | 7 | 8 | 9 | 10 | 11 | 12 | 13 | 14 | 15 | 16 | 17 | 18 | 19 | 20 | 21 | Comparative Example NO. 1 | 2 | 3 | 4 |
|---|---|---|---|---|---|---|---|---|---|---|---|---|---|---|---|---|---|---|---|---|---|---|---|---|---|
| Polycyanoarylether | 80 | 50 | 30 | 20 | 70 | 30 | 20 | 25 | 50 | 30 | 30 | 15 | 40 | 50 | 30 | 40 | 50 | 40 | 40 | 60 | 30 | 10 | 90 | 40 | 70 |
| Silicon nitride ($Si_3N_4$) | 20 | 50 | 70 | 80 | | | | | | | | | | 25 | 50 | | 30 | 40 | | | 50 | 90 | 10 | | |
| Alumina ($Al_2O_3$) | | | | | 30 | 70 | 80 | | | | | | | | | 50 | | | | | | | | 25 | |
| Silicon carbide (SiC) | | | | | | | | 75 | | | | | | | | | | | 50 | | | | | | |
| Silica ($SiO_2$) | | | | | | | | | 50 | 70 | | | | | | | | | | | | | | | |
| Zirconium oxide ($ZrO_2$) | | | | | | | | | | | 70 | 85 | | | | | | | | | | | | | |
| Boron nitride (BN) | | | | | | | | | | | | | 60 | 25 | | | | | | 30 | | | | | |
| Glass fiber | | | | | | | | | | | | | | | 20 | 10 | | | | 10 | | | | 35 | 30 |
| Carbon fiber | | | | | | | | | | | | | | | | | 20 | 20 | 10 | | | | | | |
| Aramid fiber | | | | | | | | | | | | | | | | | | | | | 20 | | | | |

Polycyanoarylether: $[\eta_{sp}/C] = 0.7$ dl/g
Silicon nitride: produced by Denkikagaku Kogyo K. K., Trademark: SN-B, particle size: 325 mesh under (not larger than 44 μm)
Alumina: produced by Showa Denko K. K., Trademark: AL-43PC, mean particle size: 13 μm
Silicon carbide: produced by Showa Denko K. K., Trademark: A-4, mean particle size: 5 μm
Silica: produced by Micron Co., Ltd., Trademark: S-0, mean particle size: 3 μm
Zirconium oxide: produced by Tateho Chemical Industries Co., Ltd., Trademark: FZ-500, mean particle size: 8 μm
Boron nitride: produced by Denki Kagaku Kogyo K. K., Trademark: GP, mean particle size: 3 μm
Glass fiber: produced by Nippon Sheet Glass Co., Ltd., Trademark: TP76, diameter: 13 μm, length: 3 mm
Carbon fiber: produced by Toray Industries, Inc., Trademark: TORAYCA T-300, roving having a diameter of 7 μm
Aramid fiber: produced by Toray Incustries, Inc., Trademark: KEVLAR 49, diameter: 12 μm, length: 3 mm

Table 2

| | Flexural modulus (kg/cm²) | Flexural strength (kg/cm²) | HDT [18.6 kg/cm²] (°C) | Molding processability | Coefficient of linear expansion ($10^{-5}$/ °C) | | Anisotropy MD/TD |
|---|---|---|---|---|---|---|---|
| | | | | | Machine direction (MD) | Transverse direction(TD) | |
| Example No. | | | | | | | |
| 1 | 68,000 | 1,590 | 212 | good | 2.8 | 2.9 | 0.97 |
| 2 | 100,000 | 1,450 | 275 | good | 2.2 | 2.3 | 0.96 |
| 3 | 214,000 | 1,390 | 296 | good | 1.6 | 1.7 | 0.94 |
| 4 | 318,000 | 1,070 | 304 | good | 1.2 | 1.4 | 0.86 |
| 5 | 87,000 | 1,530 | 245 | good | 2.6 | 2.7 | 0.96 |
| 6 | 182,000 | 1,460 | 287 | good | 1.7 | 2.0 | 0.85 |
| 7 | 323,000 | 1,200 | 294 | good | 1.2 | 1.5 | 0.80 |
| 8 | 228,000 | 1,320 | 300 | good | 1.2 | 1.2 | 1.00 |
| 9 | 99,000 | 1,720 | 263 | good | 2.1 | 2.3 | 0.91 |
| 10 | 198,000 | 1,530 | 284 | good | 1.1 | 1.2 | 0.92 |
| 11 | 117,000 | 1,430 | 281 | good | 1.8 | 1.9 | 0.95 |
| 12 | 236,000 | 980 | 301 | good | 1.5 | 1.6 | 0.94 |
| 13 | 127,000 | 1,410 | 288 | good | 1.9 | 1.9 | 1.00 |
| 14 | 97,000 | 1,160 | 279 | good | 2.1 | 2.2 | 0.95 |
| 15 | 229,000 | 1,860 | 332 | good | 1.7 | 2.0 | 0.85 |
| 16 | 152,000 | 1,740 | 305 | good | 1.6 | 2.1 | 0.76 |
| 17 | 174,000 | 1,980 | 324 | good | 1.9 | 2.3 | 0.83 |
| 18 | 206,000 | 1,890 | 330 | good | 1.7 | 2.1 | 0.81 |
| 19 | 183,000 | 1,830 | 310 | good | 1.8 | 2.1 | 0.86 |
| 20 | 132,000 | 1,710 | 276 | good | 2.0 | 2.1 | 0.95 |
| 21 | 274,000 | 1,920 | 331 | good | 1.5 | 2.2 | 0.70 |
| Comparative Example No. | | | | | | | |
| 1 | — | — | — | poor | — | — | — |
| 2 | 47,000 | 1,600 | 175 | good | 4.1 | 4.2 | 0.98 |
| 3 | 165,000 | 1,430 | 336 | good | 1.7 | 2.6 | 0.65 |
| 4 | 110,000 | 2,100 | 330 | good | 2.1 | 3.6 | 0.58 |

## Claims

1. A polycyanoarylether resin composition prepared by mixing
(A) a polycyanoarylether consisting essentially of the repeating unit represented by the following general formula

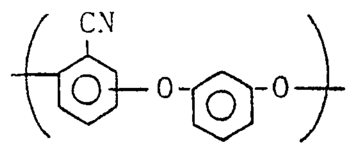

(I)

having a reduced viscosity [$\eta$ sp/C] of from 0.3 to 2.0 dl/g as measured at 60 °C in p-chlorophenol at a concentration of 0.2 g/dl; and
(B) at least an inorganic filler selected from the group consisting of silicon nitride, silicon carbide, silica, alumina, zirconia, and boron nitride;
the amount of the polycyanoarylether being from 85 to 15 % by weight and the amount of the inorganic filler being from 15 to 85 % by weight, based on the total of the amounts of the polycyanoarylether and the inorganic filler, respectively.
2. The polycyanoarylether resin composition as claimed in claim 1, wherein the repeating unit represented by the general formula (I) is present in the polycyanoarylether in an amount of at least 90 % by weight of the polycyanoarylether.
3. The polycyanoarylether resin composition as claimed in claim 1, wherein the polycyanoarylether consists of the repeating unit represented by the general formula (I).
4. The polycyanoarylether resin composition according to any of the claims 1 to 3, wherein the inorganic filler is a particulate inorganic filler having a particle size of from 0.1 to 200 $\mu$ m.
5. A polycyanoarylether resin composition prepared by mixing
(A) a polycyanoarylether consisting essentially of the repeating unit represented by the following general formula

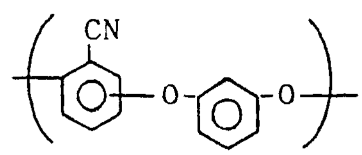

(I)

having a reduced viscosity [$\eta$ sp/C] of from 0.3 to 2.0 dl/g as measured at 60 °C in p-chlorophenol at a concentration of 0.2 g/dl;
(B) at least an inorganic filler selected from the group consisting of silicon nitride, silicon carbide, silica, alumina, zirconia, and boron nitride; and
(C) a fibrous reinforcing material;
the amount of the polycyanoarylether being from 85 to 15 % by weight, the amount of the inorganic filler being from 10 to 80 % by weight, the amount of the fibrous reinforcing material being from 5 to 30 % by weight, and the total of the amounts of the inorganic filler and the fibrous reinforcing material being from 15 to 85 % by weight, based on the total of the amounts of the polycyanoarylether, the inorganic filler, and the fibrous reinforcing material, respectively.
6. The polycyanoarylether resin composition as claimed in claim 5, wherein the repeating unit represented by the general formula (I) is present in the polycyanoarylether in an amount of at least 90 % by weight of the polycyanoarylether.
7. The polycyanoarylether resin composition as claimed in claim 5, wherein the polycyanoarylether consists of the repeating unit represented by the general formula (I).
8. The polycyanoarylether resin composition according to any of the claims 5 to 7, wherein the inorganic filler is a particulate inorganic filler having a particle size of from 0.1 to 200 $\mu$ m.
9. The polycyanoarylether resin composition according to any of the claims 5 to 7, wherein the fibrous reinforcing material is at least one selected from the group consisting of glass fiber, carbon fiber, and aramid fiber.

European Patent Office

# EUROPEAN SEARCH REPORT

Application Number

EP 90 11 8578

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,X | EP-A-0 243 000 (IDEMITSU KOSAN COMPANY LIMITED) * page 17, lines 10 - 24; claims * | 1-9 | C 08 K 3/22<br>C 08 K 3/34<br>C 08 K 3/38<br>C 08 L 71/00 |
| A | EP-A-0 193 003 (IDEMITSU KOSAN COMPANY LIMITED) * claims * | 1 | |
| A | DATABASE WPIL, no. 89-280930, Derwent Publica & JP-A-1 203 462 (IDEMITSU KOSAN K.K.) 16-08-1989 * abstract * | 1 | |
| | | | **TECHNICAL FIELDS SEARCHED (Int. Cl.5)** |
| | | | C 08 K<br>C 08 L |

The present search report has been drawn up for all claims

| Place of search | Date of completion of search | Examiner |
|---|---|---|
| The Hague | 19 December 90 | DE LOS ARCOS Y VELAZ |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document